# DEMANDE DE BREVET EUROPEEN

(11) **EP 1 650 082 A1**
(43) Date de publication de la demande: **26.04.2006**
(21) Numéro de dépôt: 05292103.8
(22) Date de dépôt: 10.10.2005
(51) Int. Cl.: B60R 5/04, B60R 7/02

(54) **Ensemble de rangement de véhicule automobile et véhicule automobile associé**

(30) Priorité: 19.10.2004 FR 0411105
(71) Demandeur: Peugeot Citroen Automobiles SA, 78140 Vélizy Villacoublay (FR)
(72) Inventeur: Le Dall, Christophe, 92150 Suresnes (FR); Morando, Patrick, 06100 Nice (FR); Bouchard, Thierry, 06500 Menton (FR)
(74) Mandataire: Domenego, Bertrand

(57) **Abrégé**

Cet ensemble (11) comprend une paroi (26) verticale et un fond (19) délimitant un volume intérieur (25) de rangement d'objets. Il comporte un plancher (21) comprenant deux panneaux rigides (37, 39) articulés entre eux, le plancher (21) présentant une configuration déployée dans laquelle chaque panneau (37, 39) est disposé en appui sur le fond (19), et une configuration cloisonnée (37, 39) dans laquelle un panneau (37) est disposé en appui sur le fond (19) et un panneau (39) occupe une position active sensiblement verticale.

L'ensemble (11) comprend également des moyens (73) de blocage du panneau (39) dans sa position active sensiblement verticale. Le plancher (21) est pliable entre sa configuration déployée et une configuration repliée dans laquelle les panneaux (37, 39) sont en appui l'un sur l'autre.

## Description

La présente invention concerne un ensemble de rangement de véhicule automobile, du type décrit dans le préambule de la revendication 1.

On connaît de WO-A-88/08379 un ensemble du type précité, comprenant un plancher amovible permettant le cloisonnement vertical du coffre pour le séparer en plusieurs compartiments.

Le plancher est disposé au-dessus du logement recevant la roue de secours.

Un but de l'invention est de fournir un ensemble de rangement de véhicule automobile qui augmente les possibilités d'aménagement intérieur du coffre.

A cet effet, l'invention a pour objet un ensemble selon la revendication 1.

L'ensemble selon l'invention peut comprendre l'une ou plusieurs des caractéristiques qui font l'objet des revendications 2 à 10, prise(s) isolément ou suivant toutes combinaisons techniquement possibles.

L'invention a en outre pour objet un véhicule automobile selon la revendication 11.

Des exemples de réalisation de l'invention vont maintenant être donnés, en regard des dessins annexés, sur lesquels :
- la figure 1 est une vue schématique, partielle et en perspective de l'extrémité arrière d'un véhicule automobile selon l'invention dans une première configuration d'aménagement intérieur ;
- la figure 2 est une vue analogue à la figure 1 dans une deuxième configuration d'aménagement intérieur ;
- la figure 3 est une vue analogue à la figure 1, dans une troisième configuration d'aménagement intérieur ;
- la figure 4 est une vue analogue à la figure 1 dans une quatrième configuration d'aménagement intérieur, et
- la figure 5 est une vue analogue à la figure 1 dans une cinquième configuration d'aménagement intérieur.

Dans tout ce qui suit, les orientations utilisées sont les orientations habituelles d'un véhicule automobile. Ainsi, les termes, « avant », « arrière », « droite », « gauche », « haut », « bas », « supérieur » et « inférieur » s'entendent par rapport à la position d'un conducteur d'un véhicule automobile et à son sens de marche.

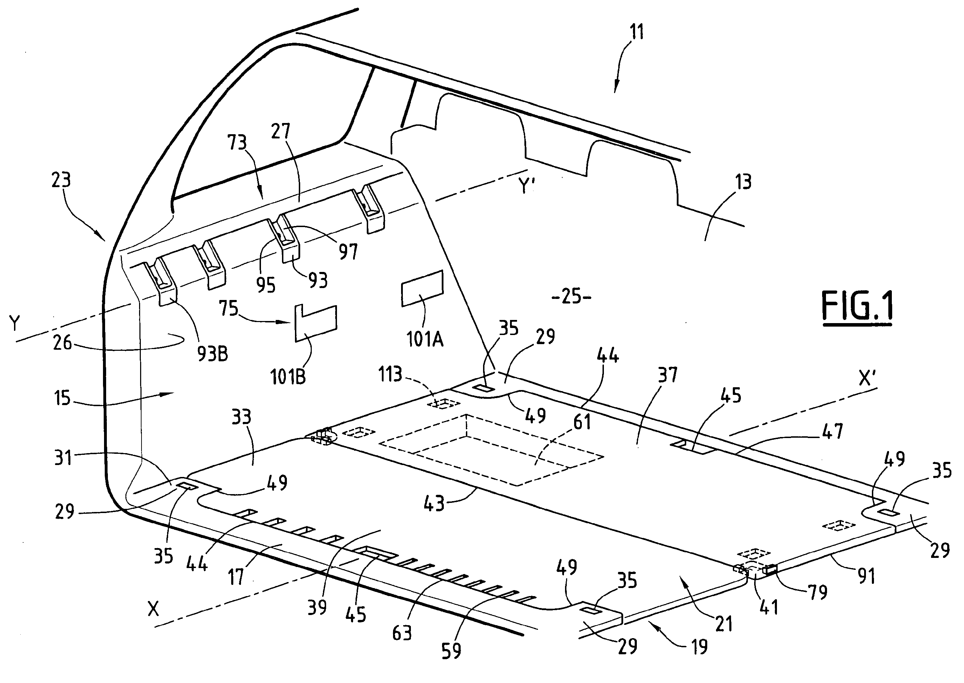

On a représenté sur la figure 1, un ensemble arrière 11 d'un véhicule automobile, selon l'invention. Cet ensemble 11 comprend des sièges arrières 13, des flancs latéraux 15 de la carrosserie, et un bord arrière 17.

Pour simplifier le dessin, seul le flanc gauche 15 a été représenté sur la figure 1.

L'ensemble arrière 11 comprend en outre un fond 19, s'étendant horizontalement entre les éléments précités. Le fond 19 est couvert par un plancher 21 amovible. L'ensemble arrière 11 comprend également des moyens 23 d'aménagement intérieur du coffre 25.

Le coffre 25 est un espace de rangement délimité verticalement par les sièges arrière 13, les flancs latéraux 15 de la carrosserie et par le hayon (non représenté) du véhicule. Il est par ailleurs délimité horizontalement par le fond 19.

Les flancs 15 du véhicule sont formés par des parois 26 sensiblement verticales qui présentent dans leur partie supérieure un épaulement 27 dirigé vers l'extérieur.

Le fond 19 est de forme sensiblement rectangulaire. Il présente à ses quatre coins des parties 29 en saillie dont la surface supérieure 31 affleure la surface supérieure 33 du plancher 21. Les parties en saillie 31 comprennent des moyens 35 de fixation du plancher 21 contre le fond 19.

Comme illustré par la figure 1, le plancher 21 comprend un panneau avant 37 et un panneau arrière 39. Ces panneaux 37, 39 sont rigides et articulés entre eux par une charnière 41 s'étendant le long d'un bord commun 43 situé à l'arrière du panneau avant 37, et à l'avant du panneau arrière 39.

Dans l'exemple représenté, les deux panneaux 37, 39 sont de forme générale rectangulaire sensiblement analogue. Chaque panneau 37, 39 comprend, sur son bord libre 44, une encoche 45 de préhension située dans la partie médiane 47 du bord libre 44. A chaque coin du bord libre 44, le panneau 37, 39 présente un gradin 49 de section horizontale complémentaire à la section horizontale de la partie en saillie 29 en regard.

Chaque panneau 37, 39 s'étend transversalement entre le flanc gauche 15 et le flanc droit. Par ailleurs, chaque panneau 37, 39 s'étend longitudinalement suivant une longueur sensiblement égale à la moitié de la longueur du fond 19.

La charnière 41 est par exemple formée par un habillage d'aspect commun qui couvre les surfaces supérieures 33 des deux panneaux 37, 39.

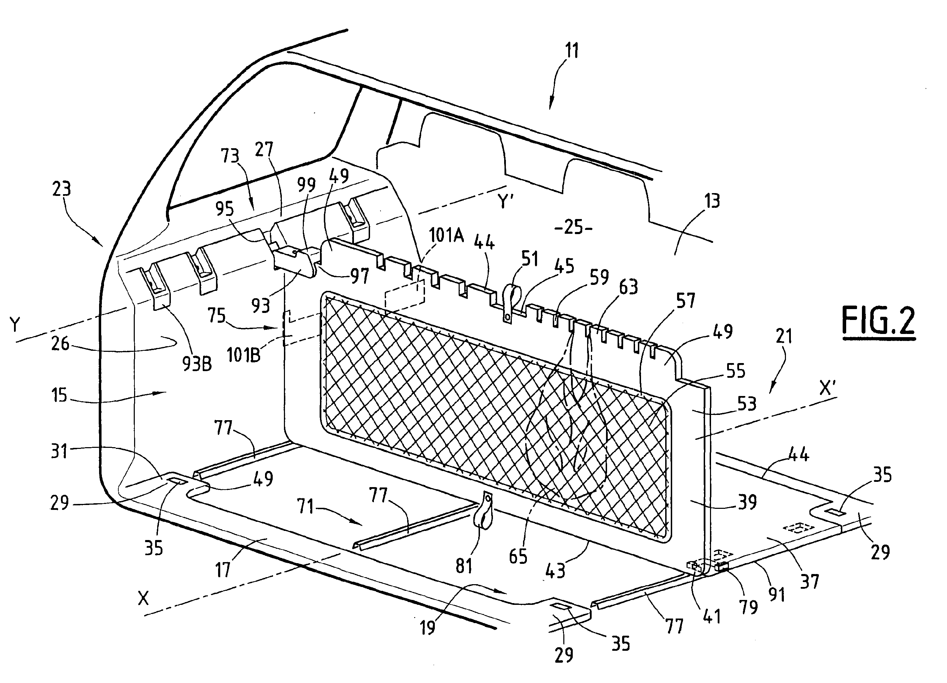

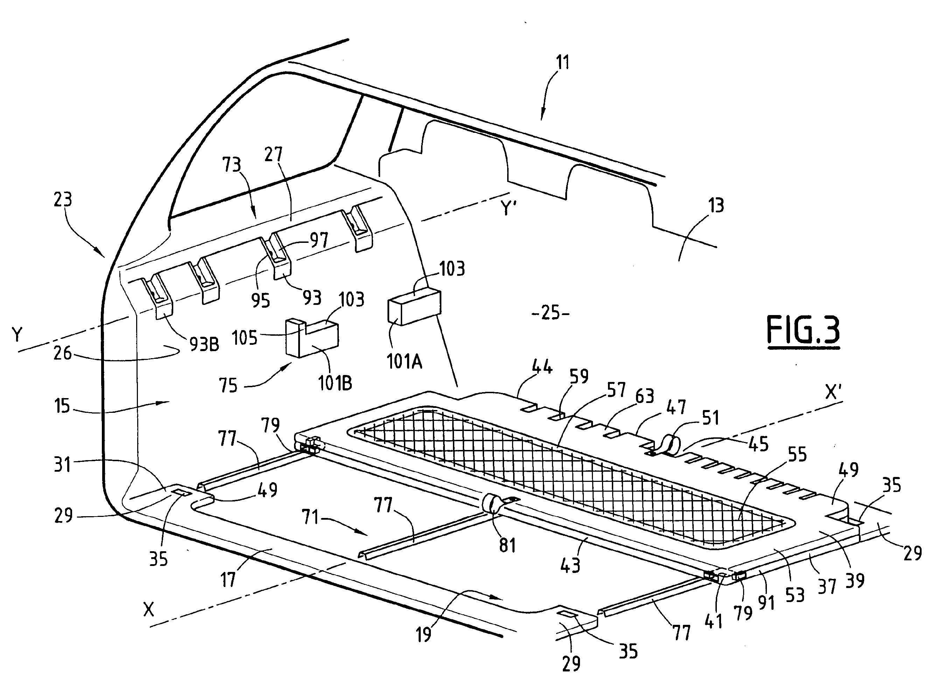

Comme on va le décrire plus bas, chaque panneau 37, 39 est ainsi mobile par rapport à l'autre entre une position sensiblement horizontale d'appui sur le fond 19 représentée à la figure 1, une position intermédiaire sensiblement verticale représentée à la figure 2 et une position escamotée sensiblement horizontale en appui sur l'autre panneau 39, 37 représentée à la figure 3.

Comme représenté à la figure 2, une sangle arrière 51 de préhension est fixée sur la surface inférieure 53 du panneau arrière 39 au voisinage de l'encoche 45 afin de faciliter le déplacement du panneau arrière 39 par rapport au panneau avant 37, autour de la charnière 41. Le panneau arrière 39 est par ailleurs muni, sur sa surface inférieure 53, d'un filet 55 plaqué sur la surface 53 par un cadre 57.

Le panneau arrière 39 présente par ailleurs une pluralité de fentes 59 longitudinales débouchant sur son bord libre 44, entre l'encoche 45 et chacun des gradins latéraux 49.

Lorsque les deux panneaux 37, 39 sont dans leurs positions horizontales illustrées par la figure 1, à l'écart l'un de l'autre, ils couvrent sensiblement le fond 19 du coffre 25. Le panneau avant 37 masque un logement 61 ménagé dans le fond 19 du coffre 25. Le plancher 21 présente alors une configuration déployée représentée sur la figure 1, dans lequel les panneaux 37, 39 sont tous les deux en appui contre des supports 71 solidaires du fond 19, visibles à la figure 2.

Dans la position intermédiaire du panneau arrière 39, représentée à la figure 2, le plancher 21 ne couvre plus qu'une partie du fond 19. Le plancher 21 occupe une configuration de cloisonnement dans laquelle le panneau arrière 39 délimite verticalement deux logements longitudinaux dans le coffre 25.

Dans cette position, les fentes 59 débouchent vers le haut. Les créneaux 63 formés par deux fentes 59 adjacentes délimitent alors des moyens de suspension d'un objet 65 à l'écart du fond.

Dans la position escamotée du panneau arrière 39 représentée à la figure 3, le panneau avant 37 reste en appui contre le fond 19, et le panneau arrière 39 est complètement rabattu sur le panneau 37 et en appui sur celui-ci. Le plancher 21 occupe une configuration repliée dans laquelle il est mobile en translation sur les supports 71 du fond 19 le long d'un axe longitudinal X-X' entre une position arrière en butée contre le bord arrière 17 et une position avant en butée contre les sièges avant 13.

Dans sa configuration repliée, le plancher 21 est par ailleurs totalement amovible par rapport au fond 19 du coffre.

Comme représenté aux figures 2 et 3, les moyens d'aménagement intérieur 23 comprennent, outre les supports 71, des moyens 73 de blocage d'un panneau 39 en position verticale, et des moyens 75 de maintien du plancher 21 dans sa configuration repliée, dans une position horizontale intermédiaire à l'écart du fond 19.

Les supports 71 comprennent des nervures 77 profilées longitudinales de déplacement en translation longitudinale du plancher 21 dans sa configuration repliée, des patins 79 de blocage montés dans le panneau avant 37, et une sangle 81 avant rapportée sur la surface inférieure 53 du panneau arrière 39, au voisinage du bord commun 43.

Les nervures 77 font saillie par rapport au fond 19. Elles sont par exemple réalisées à l'aide d'un matériau présentant un faible coefficient de friction comme du polytétrafluorure d'éthylène (PTFE). Le panneau avant 37 glisse sur les nervures 77 lorsque le plancher 21 est dans sa configuration repliée.

Les patins de blocage 79 sont déployables transversalement à partir des bords latéraux 91 du panneau avant 37. Ils permettent d'immobiliser le plancher 21, dans sa configuration repliée, dans une pluralité de positions intermédiaires entre la position avant et la position arrière.

Les moyens 73 de blocage du panneau 39 en position verticale comprennent des crochets 93 escamotables montés dans les flancs 15 du véhicule.

Dans l'exemple illustré, chaque flanc 15 est muni, dans sa partie supérieure 27, de quatre crochets 93 répartis le long d'un axe longitudinal commun Y-Y' du véhicule.

Chaque crochet 93 du flanc gauche 15 est disposé en regard d'un crochet du flanc droit (non représenté), symétriquement par rapport au plan longitudinal médian du véhicule.

Chaque crochet 93 est monté rotatif autour de l'axe Y-Y' entre une position escamotée dans un logement 95 de forme complémentaire ménagé dans la paroi 26, représentée à la figure 1, et une position active en saillie, représentée à la figure 2.

Dans la position active en saillie, le crochet 93 présente une région inférieure munie d'une gorge 97 s'étendant transversalement. La gorge 97 présente une forme complémentaire à la tranche du panneau vertical 39 au niveau du gradin 49. Le crochet 93 comprend en outre une partie supérieure 99 en saillie vers le haut qui forme une patère dans la position active du crochet 93.

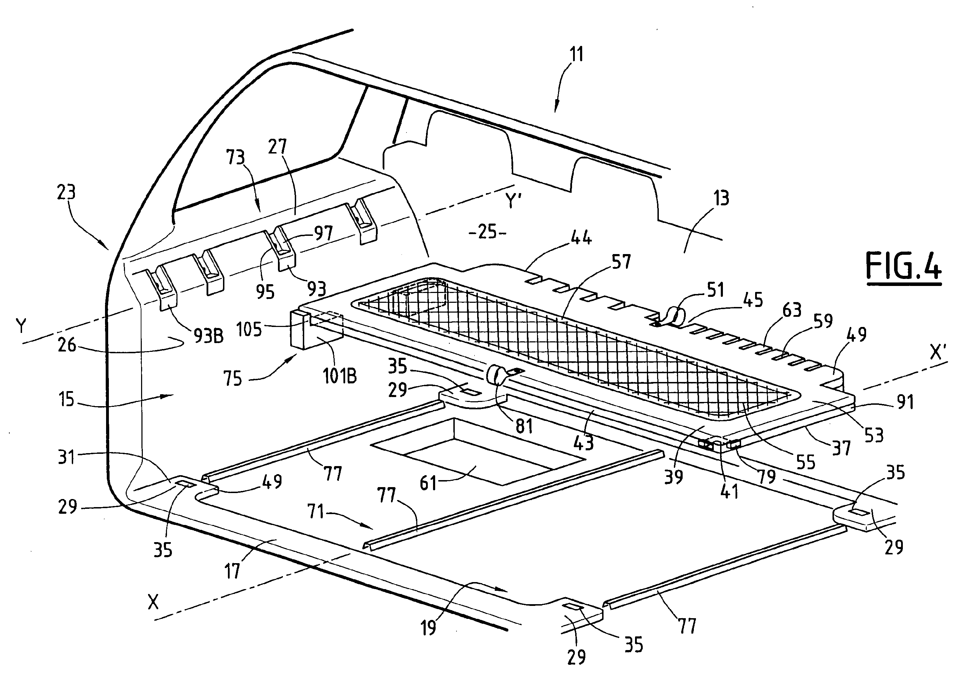

Dans l'exemple illustré par la figure 4, les moyens 75 de maintien du plancher replié 21 dans une position sensiblement horizontale à l'écart du fond comprennent des organes de support 101A, 101B qui sont déployables transversalement dans le coffre 25, depuis une position escamotée dans la paroi 26 jusqu'à une position active de support en saillie dans le coffre 25.

Dans l'exemple représenté, chaque flanc 15 comprend deux organes de support 101A,101B disposés à une hauteur intermédiaire entre les crochets 93 et le fond 21 du coffre. La distance qui sépare longitudinalement les organes de support 101A, 101B est sensiblement égale à la longueur du panneau avant 37.

Comme illustré par la figure 3, chaque organe de support 101A, 101B comprend, dans sa position active, une surface d'appui horizontale 103 sensiblement plane destinée à recevoir une partie d'un bord latéral 91 du panneau avant 37.

Les organes de support arrière 101B comprennent en outre une partie arrière 105 qui fait saillie vers le haut par rapport à la surface de support 103 et qui forme une butée arrière de maintien du panneau avant 37, contre laquelle le bord commun 43 de ce panneau 37 vient buter lorsque le plancher 21 dans sa configuration repliée est disposé en appui sur les organes 101. La butée 105 empêche alors le déplacement du panneau avant 37 vers l'arrière.

Le fonctionnement de l'ensemble arrière 11 selon l'invention va maintenant être décrit.

Dans une première configuration d'aménagement intérieur représentée à la figure 1, le plancher 21 occupe sa configuration déployée, les deux panneaux 37, 39 étant disposés en appui sur les nervures 77, et couvrant le fond 19. Les moyens de fixation 35 sont alors activés pour maintenir le plancher 21 dans sa configuration déployée.

Pour accéder au logement 61 ménagé dans le fond 19 à l'avant du coffre, on libère les moyens de fixation 35 du panneau arrière 39 et on pivote ce panneau 39 autour de la charnière 41 transversale jusqu'à sa position escamotée sur le panneau avant 37, au moyen de la sangle arrière 51.

Le plancher 21 présente alors sa configuration repliée représentée à la figure 3, et occupe sa position avant. Puis, on tire sur la sangle 81 et on déplace le plancher 21 par coulissement sur le fond 19 le long des nervures 77 jusqu'à la position arrière du plancher 21. L'accès au logement avant 61 est alors dégagé.

Pour obtenir un premier cloisonnement vertical du coffre 25, on déplace à nouveau le plancher 21 vers l'avant jusqu'à ce que la charnière 41 soit alignée entre deux crochets 93 de blocage respectifs sur les flancs gauche 15 et droit du véhicule. Puis, on déploie les patins 79 de blocage du panneau avant 37 et on déplace le panneau arrière 39 vers le haut et vers l'arrière par pivotement autour de la charnière 41 au moyen de la sangle 51, jusqu'à ce que ce panneau 39 occupe sa position intermédiaire sensiblement verticale, représentée à la figure 2.

Puis, on déploie les crochets 93 en regard des coins 49 du panneau vertical 39 sur les flancs 15 respectifs depuis leur position escamotée vers leur position active. Lors de ce déploiement, les coins 49 respectifs du panneau 39 sont insérés dans les gorges correspondantes 97 des crochets 93, jusqu'à ce que les coins 49 respectifs des panneaux 39 entrent en contact avec le fond des gorges 97. Le panneau 39 est alors bloqué en position verticale par les crochets 93. Le plancher 21 occupe alors une première configuration de cloisonnement vertical du coffre 25.

Pour obtenir un deuxième cloisonnement vertical avec deux compartiments de longueurs différentes, on libère le panneau arrière 39 des crochets 93, puis on ramène le plancher 21 dans sa configuration repliée. Puis, on déplace à nouveau le plancher 21 par glissement jusqu'à ce qu'il atteigne une position en regard de deux crochets 93B distincts des crochets 93 précédents.

Pour obtenir un cloisonnement horizontal du coffre, on place le plancher 21 dans sa configuration repliée, puis on déploie les organes de maintien 101 dans le coffre 25. On détache ensuite le plancher 21 du fond 19 et on pose le panneau avant 37 sur les surfaces de support 103 des organes de maintien 101, en calant le bord commun 43 des panneaux 37, 39 contre la butée arrière 105. Comme illustré par la figure 4, le plancher 21 forme alors une étagère sensiblement horizontale disposée à une hauteur inférieure à celle de la tablette arrière (non représentée).

L'étagère formée par le plancher 21 dans sa configuration repliée s'étend par ailleurs sur une partie de la longueur du coffre 25 et non sur sa totalité.

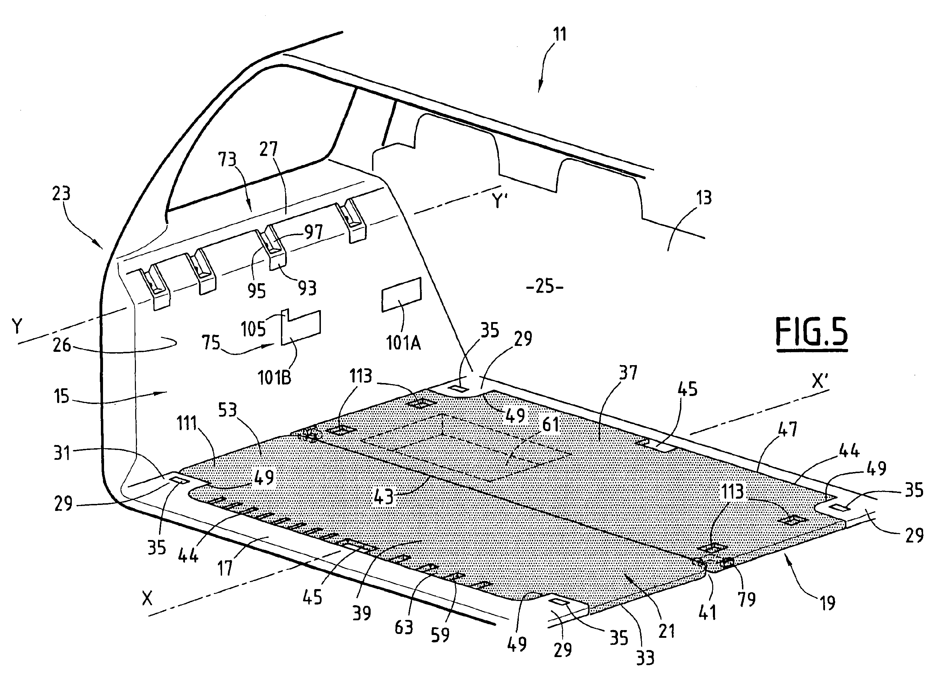

Dans la variante représentée sur la figure 5, le panneau arrière 39 est dépourvu de filet 55 sur sa surface inférieure 53. Par ailleurs, les surfaces supérieure 33 et inférieure 53 du plancher 21 sont chacune munies d'un habillage d'aspect. L'habillage d'aspect 111 de la surface 53 est différent de celui de la surface 33. Ainsi, en retournant le plancher 21, il est possible de modifier l'aspect esthétique du coffre 25 en fonction de l'utilisation requise pour ce coffre 25.

Dans une autre variante, des lumières d'insertion 113 représentées en pointillés sur la figure 1 sont ménagées au voisinage de chaque bord latéral 91 du panneau avant 37. Ces lumières 113 s'étendent au voisinage des coins avant et arrière du panneau 37. La distance qui sépare deux lumières 113 sur un bord latéral du panneau 37 est égale à la distance qui sépare deux crochets 93 du flanc 15 en regard. Par ailleurs, la section horizontale des lumières 113 correspond sensiblement à la section horizontale des parties en saillie 99 formant patère de chaque crochet 93.

Dans cette variante, le plancher 21 peut être disposé horizontalement en appui sur des crochets 93 déployés dans le coffre 25, en insérant les parties en saillie 99 dans des lumières 113 correspondantes. Dans cette variante, les organes de support du plancher replié 21 dans sa position horizontale à l'écart du fond 19 sont ainsi formés par les crochets 93.

Grâce à l'invention qui vient d'être décrite, il est possible de disposer d'un ensemble de rangement 11 de véhicule automobile qui présente des possibilités accrues d'aménagement intérieur.

Grâce à l'utilisation d'un plancher 21 comprenant au moins deux panneaux 37, 39 rigides articulés entre eux, mobiles en translation par rapport au fond lorsque l'un des panneaux 37 est disposé sur le fond, associés à des organes de blocage 93 d'au moins un panneau dans une position verticale répartie le long du coffre 25, il est possible d'obtenir une pluralité de possibilités de cloisonnement vertical du coffre 25.

Lorsque des organes 101 de maintien du plancher 21 dans sa configuration repliée dans une position verticale à l'écart du fond 19 sont prévus, il est possible d'utiliser ce plancher replié 21 comme une étagère et de former ainsi un cloisonnement horizontal du coffre.

Le plancher 21 peut présenter des habillages d'aspect distincts sur chacune de ses surfaces opposées, pour modifier l'aspect esthétique du coffre 25 en retournant le plancher 21 dans sa configuration déployée.

## Revendications

1. Ensemble (11) de rangement de véhicule automobile, du type comprenant :
- au moins une paroi (26) verticale et un fond (19) délimitant au moins partiellement un volume intérieur (25) de rangement d'objets ;
- un plancher (21) comprenant au moins deux panneaux (37, 39) rigides articulés entre eux, le plancher (21) présentant une configuration déployée dans laquelle chaque panneau (37, 39) est disposé en appui sur le fond (19), et une configuration cloisonnée dans laquelle un panneau (37) est disposé en appui sur le fond (19) et un panneau (39) occupe une position active sensiblement verticale ;
- des moyens (73) de blocage du panneau (39) dans sa position active sensiblement verticale ;
**caractérisé en ce que** le plancher (21) est pliable entre sa configuration déployée et une configuration repliée dans laquelle les panneaux (37, 39) sont en appui l'un sur l'autre.

2. Ensemble (11) selon la revendication 1, **caractérisé en ce que** dans la configuration repliée, le plancher (21) est déplaçable en translation par rapport au fond (19) entre au moins deux positions longitudinales différentes.

3. Ensemble (11) selon l'une quelconque des revendications 1 à 2, **caractérisé en ce que** dans la configuration repliée, le plancher (21) est déplaçable à coulissement sur le fond (19) le long d'un axe longitudinal (X-X').

4. Ensemble (11) selon l'une quelconque des revendications 1 à 3, **caractérisé en ce que** les moyens de blocage (73) sont montés dans la paroi verticale (26).

5. Ensemble (11) selon l'une quelconque des revendications 1 à 4, **caractérisé en ce que**, dans sa position repliée, le plancher (21) est amovible par rapport au fond (19), l'ensemble (11) comprenant des moyens (101 ; 73) de maintien du plancher (21) dans sa configuration repliée, dans une position sensiblement horizontale à l'écart du fond (19).

6. Ensemble (11) selon la revendication 5, **caractérisé en ce que** les moyens de maintien (101 ; 73) sont montés dans la paroi verticale (26).

7. Ensemble (11) selon l'une quelconque des revendications 5 à 6, **caractérisé en ce que** les moyens de maintien sont formés par les moyens de blocage (73).

8. Ensemble (11) selon l'une quelconque des revendications précédentes, **caractérisé en ce que** dans sa position sensiblement verticale, le panneau (39) comprend des moyens (59, 63) de suspension d'au moins un objet (65) à l'écart du fond (19).

9. Ensemble (11) selon la revendication 8, **caractérisé en ce que** les moyens de suspension (59, 63) comprennent au moins deux fentes (59) ménagées dans l'un desdits panneaux (39) et débouchant dans le bord libre (44) dudit panneau (39) dans sa position sensiblement verticale.

10. Ensemble (11) selon l'une quelconque des revendications précédentes, **caractérisé en ce que** le plancher (21) comprend, dans sa configuration déployée, deux surfaces (33, 53) opposées munies d'habillages d'aspect respectifs distincts.

11. Véhicule automobile, **caractérisé en ce qu'**il comprend un ensemble (11) selon l'une quelconque des revendications précédentes.
